# EUROPÄISCHE PATENTANMELDUNG

(11) **EP 4 297 155 A1**
(43) Veröffentlichungstag der Anmeldung: **27.12.2023**
(21) Anmeldenummer: 23179092.4
(22) Anmeldetag: 14.06.2023
(51) Int. Cl.: H01M 50/107, H01M 50/152, H01M 50/167

(54) **BATTERIE MIT GEHÄUSEMANTEL IN FORM EINES BIEGEBAUTEILS**

(30) Priorität: 21.06.2022 DE 102022115353
(71) Anmelder: VOLKSWAGEN AG, 38440 Wolfsburg (DE)
(72) Erfinder: Czech, Marvin, 38106 Braunschweig (DE); Yurtseven, Mesut, 38226 Salzgitter (DE); Kwoczek, Lukas, 38102 Braunschweig (DE); Ebbighausen, Marius, 31718 Pollhagen (DE); Schnorfeil, Philipp, 38114 Braunschweig (DE)
(74) Vertreter: Bungartz, Florian

(57) **Zusammenfassung**

Batterie mit einem Gehäuse und mindestens einer innerhalb des Gehäuses aufgenommenen Batteriezelle, wobei das Gehäuse einen die mindestens eine Batteriezelle umgebenden Gehäusemantel (1) umfasst, der an den zwei in einer Längsrichtung des Gehäusemantels (1) gelegenen Enden jeweils eine Zugangsöffnung aufweist, die mittels jeweils eines Gehäusedeckels (6) verschlossen ist, und wobei der Gehäusemantel (1) als Biegebauteil aus einem Blechzuschnitt ausgebildet ist, wobei zwei Randbereiche des Blechzuschnitts eine in der Längsrichtung verlaufende Verbindungsstelle (7) ausbilden.

## Beschreibung

Die Erfindung betrifft eine Batterie mit einem Gehäuse und mindestens einer innerhalb des Gehäuses aufgenommenen Batteriezelle.

Eine Batterie ist ein Speicher für elektrische Energie auf elektrochemischer Basis, bei deren Entladung gespeicherte chemische Energie durch eine elektrochemische Redoxreaktion in elektrische Energie gewandelt wird. Im Kontext der Erfindung werden als Batterien sowohl sogenannte Primärbatterien, die nur für eine einmalige Entladung und nicht für ein erneutes Laden vorgesehen sind, als auch sogenannte Sekundärbatterien beziehungsweise Akkumulatoren, die für ein mehrfaches Laden vorgesehen und entsprechend ausgelegt sind, verstanden. Ein Laden einer Sekundärbatterie stellt dabei die elektrolytische Umkehrung der bei der Entladung ablaufenden elektrochemischen Redoxreaktion dar, die durch das Anlegen einer elektrischen Spannung realisiert wird.

Eine Batterie umfasst eine oder mehrere galvanische Zellen beziehungsweise Batteriezellen, die innerhalb einer Umhüllung, üblicherweise in Form einer als "Pouch" bezeichneten Folienumhüllung oder eines Gehäuses, angeordnet sind. Die Batteriezellen umfassen jeweils zwei Elektroden, einen zwischen den Elektroden angeordneten Separator zur elektrischen Separierung der Elektroden und einen als lonenleiter fungierenden Elektrolyten. Die zwei Elektroden einer Batteriezelle unterschieden sich hinsichtlich eines umfassten Aktivmaterials, wodurch eine der Elektroden anodisch und die andere kathodisch wirksam ist (jeweils bezogen auf ein Entladen der Batteriezelle). Weiterhin umfasst eine Batterie üblicherweise zwei Batteriepole, die in die Umhüllung integriert sind und die innenseitig der Umhüllung über sogenannte Stromableiter mit den Elektroden elektrisch leitend verbunden sind. Dabei sind alle anodisch wirksamen Elektroden mit einem der Batteriepole und die kathodisch wirksamen Elektroden mit dem anderen der Batteriepole verbunden.

Im Rahmen der Herstellung einer Batterie mit Gehäuse kann vorgesehen, den oder die Batteriezellen, beispielsweise in Form einer vorgefertigten Stapelung oder Wickelung der Elektroden und Separatoren, in einen Gehäusemantel einzubringen, wozu der Gehäusemantel mindestens eine entsprechend dimensionierte Zugangsöffnung aufweist. Diese Zugangsöffnung wird nachfolgend mit einem Gehäusedeckel verschlossen.

Eine Batterie mit einem Gehäuse, bei der ein Gehäusemantel an den beiden längsaxialen Enden jeweils eine Zugangsöffnung ausbildet, die jeweils mit einem Gehäusedeckel verschlossen ist, ist aus der US 2016/0301118 A1 bekannt.

Der Erfindung liegt die Aufgabe zugrunde, eine Batterie mit einem Gehäuse konstruktiv und insbesondere hinsichtlich einer möglichst einfachen und kostengünstigen Herstellbarkeit zu verbessern.

Diese Aufgabe ist bei einer Batterie gemäß dem Patentanspruch 1 gelöst. Vorteilhafte Ausgestaltungsformen einer solchen Batterie sind Gegenstände der weiteren Patentansprüche und ergeben sich aus der nachfolgenden Beschreibung der Erfindung.

Eine erfindungsgemäße Batterie umfasst ein Gehäuse und mindestens eine innerhalb des Gehäuses aufgenommene Batteriezelle, wobei das Gehäuse einen die mindestens eine Batteriezelle umgebenden Gehäusemantel umfasst, der an den zwei in einer Längsrichtung des Gehäusemantels gelegenen Enden jeweils eine Zugangsöffnung aufweist, die mittels jeweils eines Gehäusedeckels verschlossen ist. Erfindungsgemäß ist der Gehäusemantel als Biegebauteil aus einem Blechzuschnitt ausgebildet ist, wobei zwei Randbereiche des Blechzuschnitts eine in Längsrichtung verlaufende Verbindungsstelle ausbilden.

Als "Blech" wird ein durch Walzen eines Rohlings aus Metall hergestelltes Halbzeug verstanden, dessen Breite und Länge um eine Vielfaches, insbesondere um mindestens das Einhundert- oder das Eintausendfache, größer als seine Dicke sind. Ein Blech kann dabei insbesondere einen im Wesentlichen ebenen Verlauf seiner (durch die Länge und Breite aufgespannten) Großflächen aufweisen, was jedoch nicht zwingend erforderlich ist.

Als "Blechzuschnitt" wird erfindungsgemäß ein Blech mit einem für die vorgesehene Nutzung zur Erzeugung des Gehäusemantels angepassten Abmessungen verstanden, wobei vorzugsweise vorgesehen sein, dass die Abmessungen des Blechzuschnitts bereits derart bemessen sind, dass nachträgliche (d.h. nach dem Biegen des Blechzuschnitts zur Ausbildung des Gehäusemantels) keine Abmessungsänderungen durch ein Zuschneiden des Blechmaterials mehr erforderlich sind.

Eine Ausgestaltung des Gehäusemantels als "Biegebauteil" bedeutet erfindungsgemäß, dass der Blechzuschnitt gegenüber einem Auslieferungszustand umgeformt und dabei plastisch deformiert wird, um den Gehäusemantel auszubilden.

Eine erfindungsgemäße Batterie kann sich infolge der Ausgestaltung des Gehäusemantels als Biegebauteil durch eine einfache und kostengünstige Herstellbarkeit auszeichnen.

Gemäß einer bevorzugten Ausgestaltungsform einer erfindungsgemäßen Batterie kann vorgesehen sein, dass die Randbereiche des Blechzuschnitts zur Ausbildung der Verbindungsstelle stoffschlüssig gefügt sind. Vorzugsweise kann dabei ein thermisch stoffschlüssiges Fügen, insbesondere Schweißen oder Löten, vorgesehen sein. Auch ein Kleben kann ein vorteilhaft umsetzbares stoffschlüssiges Fügen darstellen. Ein weiterer Vorteil einer stoffschlüssigen Fügung der Randbereiche des Blechzuschnitts, neben der einfachen Umsetzbarkeit, liegt darin, dass die dabei ausgebildete Fügestelle abdichtend, insbesondere auch gasdicht abdichtend ausgeführt sein kann. Eine gasdichte Ausgestaltung des Gehäuses der Batterie kann erforderlich oder zumindest vorteilhaft sein. Alternativ oder insbesondere auch ergänzend zu einer stoffschlüssigen Fügung der Randbereiche des Blechzuschnitts können diese aber auch andersartig, insbesondere formschlüssig, gefügt sein.

Gemäß einer bevorzugten Ausgestaltungsform einer erfindungsgemäßen Batterie kann vorgesehen sein, dass die Querschnittsform des Gehäusemantels, d.h. der Verlauf der Wandung des Gehäusemantels in zumindest einem, vorzugsweise in allen verschiedenen Querschnitten, eckenfrei (d.h. ohne in einem Winkel ineinander übergehende Abschnitte) ausgestaltet ist. Ein solcher Gehäusemantel ist einfach und kostengünstig als Biegebauteil herstellbar. Weiterhin ist ein solcher Gehäusemantel vorteilhaft mit einer Batteriezelle kombinierbar, die, wie dies vorzugsweise bei einer erfindungsgemäßen Batterie vorgesehen ist, als Batteriezellenwickel vorliegt. Bei einem solchen Batteriezellenwickel ist eine Stapelung aus mindestens oder exakt zwei Elektroden und mindestens oder exakt drei Separatoren der Batteriezelle zusätzlich noch aufgewickelt, um möglichst großflächige Elektroden- und Separatorbauteile möglichst kompakt in einer vorteilhaft dimensionierten und dadurch gut handhabbaren Batterie zu kombinieren. Der Gehäusemantel und der Batteriezellenwickel können dadurch vorteilhaft aneinander angepasste Querschnittsformen aufweisen. Dabei kann der Gehäusemantel besonders bevorzugt zwei parallel verlaufende Flachabschnitte und zwei die Flachabschnitte jeweils verbindende Krümmungsabschnitte seiner Wandung aufweisen, was sich gegenüber konventionellen Batterien, die einen zu einem Zylinder geformten Batteriezellenwickel aufweisen, durch eine verbesserte Bauraumausnutzung bei einer Integration mehrerer entsprechender Batterien in einen dafür vorgesehenen Bauraum auszeichnen kann. Im Vergleich zu einer Batterie mit quaderförmiger Form kann dagegen die Herstellbarkeit vereinfacht sein, was insbesondere auch in der vereinfachten Herstellung eines Batteriezellenwickels im Vergleich zu einer ausschließlichen Stapelung der Batteriezellenkomponenten (Elektroden und Separatoren) begründet sein kann.

Zumindest einer, vorzugsweise beide der Gehäusedeckel einer erfindungsgemäßen Batterie können vorteilhaft als Stanzbauteil, insbesondere als Stanz-Biegebauteil mit ergänzender Umformung, vorzugsweise gestanzt aus dem gleichen (Blech-)Halbzeug, wie es für die Herstellung des Gehäusemantels vorgesehen ist, ausgestaltet sein. Auch dies ermöglicht eine einfache und damit kostengünstige Herstellbarkeit einer erfindungsgemäßen Batterie.

Weiterhin bevorzugt kann vorgesehen sein, dass der Gehäusemantel und/oder die Gehäusedeckel zumindest teilweise, vorzugsweise vollständig aus Stahl und/oder Aluminium ausgestaltet sind. Neben einer vorteilhaften Strukturfestigkeit beziehungsweise Stabilität, die das Gehäuse dadurch erhalten kann, ermöglicht eine Ausgestaltung aus Stahl die Realisierung relativ geringer Herstellungskosten, während eine Ausgestaltung aus Aluminium insbesondere die Realisierung einer relativ kleinen Masse des Gehäuses gewährleisten kann.

Der Gehäusemantel und/oder die Gehäusedeckel können vorzugsweise einen Grundkörper aufweisen, der besonders bevorzugt vollständig aus Stahl und/oder Aluminium ausgestaltet sein kann. Neben einem solchen Grundkörper kann/können der Gehäusemantel und/oder die Gehäusedeckel außenseitig und/oder innenseitig (jeweils bezogen auf das Innenvolumen des Gehäuses) des Grundkörpers eine Zusatzschicht aufweisen. Diese Zusatzschicht kann insbesondere dafür ausgelegt und eingerichtet sein, vor Korrosion des Materials des Grundkörpers zu schützen (z.B. bei einer Zusatzschicht aus oder mit Zinn und/oder aus Kunststoff) und/oder eine elektrische Isolation zu bewirken (z.B. bei einer Zusatzschicht aus einem entsprechenden Kunststoff).

Vorzugsweise kann vorgesehen sein, dass zumindest einer, vorzugsweise beide der Gehäusedeckel mit dem Gehäusemantel formschlüssig verbunden ist/sind, wodurch eine einfache und kostengünstige und gleichzeitig gut abdichtende Verbindung zwischen diesen Komponenten realisiert werden kann. Besonders bevorzugt kann dabei vorgesehen sein, dass (jeweils) ein Randabschnitt des Gehäusemantels und ein Randabschnitt des/der Gehäusedeckel(s) zusammen umgeformt sind. Um dabei eine möglichst gut abdichtende Verbindung zwischen den Komponenten zu realisieren kann weiterhin bevorzugt vorgesehen sein, dass (jeweils) ein Randabschnitt des Gehäusemantels in einem ersten Umschlag beziehungsweise innerhalb dieses ersten Umschlags eines Randabschnitts des/der Gehäusedeckel(s) angeordnet ist und diese Kombination (Randabschnitt des Gehäusemantels innerhalb eines ersten Umschlags eines Randabschnitts eines Gehäusedeckels) zu einem zweiten Umschlag umgeformt ist.

Gemäß einer bevorzugten Ausgestaltungsform einer erfindungsgemäßen Batterie kann weiterhin vorgesehen sein, dass jeweils mindestens ein Dichtelement zwischen dem Gehäusemantel und zumindest einem, vorzugsweise beiden der Gehäusedeckel angeordnet ist, um ein möglichst gut abgedichtetes, insbesondere auch gasdichtes Gehäuse zu realisieren. Bei einer solchen erfindungsgemäßen Batterie, die zusätzlich die zuvor genannte formschlüssige Verbindung mittels doppeltem Umschlag von Randbereichen des Gehäusemantels und zumindest einem der Gehäusedeckel aufweist, kann weiterhin bevorzugt vorgesehen sein, dass (jeweils) mindestens zwei Dichtelemente zwischen dem Gehäusemantel und dem/den Gehäusedeckel(n) angeordnet sind, wobei von den mindestens zwei Dichtelementen jeweils mindestens eines auf den beiden Seiten des innerhalb des ersten Umschlags gelegenen Randabschnitts des Gehäusemantels gelegen ist. Auch dies dient dem Ziel der Realisierung einer möglichst belastbaren mechanischen und gleichzeitig gut abgedichteten Verbindung zwischen dem Gehäusemantel und dem/den Gehäusedeckel(n).

In zumindest einen der Gehäusedeckel einer erfindungsgemäßen Batterie kann/können vorzugsweise mindestens ein Batteriepol, gegebenenfalls auch zwei Batteriepole integriert sein. Besonders bevorzugt kann vorgesehen sein, dass in die beiden Gehäusedeckel jeweils ein Batteriepol integriert ist. Dies stellt eine konstruktiv vorteilhafte Integration der Batteriepole in eine erfindungsgemäße Batterie dar, wobei auch alternative Integrationsmöglichkeiten, beispielsweise in den Gehäusemantel, vorteilhaft umsetzbar sind.

Eine erfindungsgemäße Batterie kann vorzugsweise mindestens ein Überdruckventil umfassen, das dafür eingerichtet ist, bei einem einen definierten Grenzwert überschreitenden Druck innerhalb des Gehäuses der Batterie zu öffnen, um diesen Überdruck zu entlasten, so dass im Schadensfall ein unkontrolliertes Bersten des Gehäuses vermieden werden kann. Ein solcher Überdruck kann beispielsweise im Falle eines sogenannten thermischen Durchgehens der Batterie auftreten. Vorzugsweise kann vorgesehen sein, dass eine gezielt vorgesehene Schwachstelle der Verbindungsstelle des Gehäusemantels ein solches Überdruckventil ausbildet beziehungsweise als ein solches Überdruckventil wirkt, wodurch einfach und kostengünstig eine entsprechende Funktionalität für eine erfindungsgemäße Batterie realisiert werden kann. Ergänzend oder alternativ kann ein solches Überdruckventil, insbesondere in Form eines Berstelements, dass bei einem den definierten Grenzwert überschreitenden Druck definiert versagt, auch vorteilhaft in mindestens einen der Gehäusedeckel integriert sein. Hierzu kann beispielsweise vorgesehen sein, dass im Rahmen der Herstellung des Gehäusedeckels oder der Gehäusedeckel, was vorzugsweise (auch) durch Stanzen erfolgt, eine Ventilöffnung in einem Hauptelement des Gehäusedeckels ausgebildet, insbesondere ausgestanzt wird, die anschließend im Rahmen der Herstellung der Batterie mit einem Berstelement überdeckt und mit dem Hauptelement verbunden, insbesondere stoffschlüssig verbunden wird.

Bei einer erfindungsgemäßen Batterie kann es sich insbesondere um eine Traktionsbatterie oder einen Teil einer solchen Traktionsbatterie für ein Kraftfahrzeug handeln. Mittels einer solchen Traktionsbatterie kann einem elektrischen Traktionsmotor des Kraftfahrzeugs, der eine Antriebsleistung des Kraftfahrzeugs bereitstellt, elektrische Energie zur Verfügung gestellt werden.

Die Erfindung wird nachfolgend anhand eines in den Zeichnungen dargestellten Ausgestaltungsbeispiels näher erläutert. In den Zeichnungen zeigt, jeweils/teilweise in vereinfachter Darstellung:

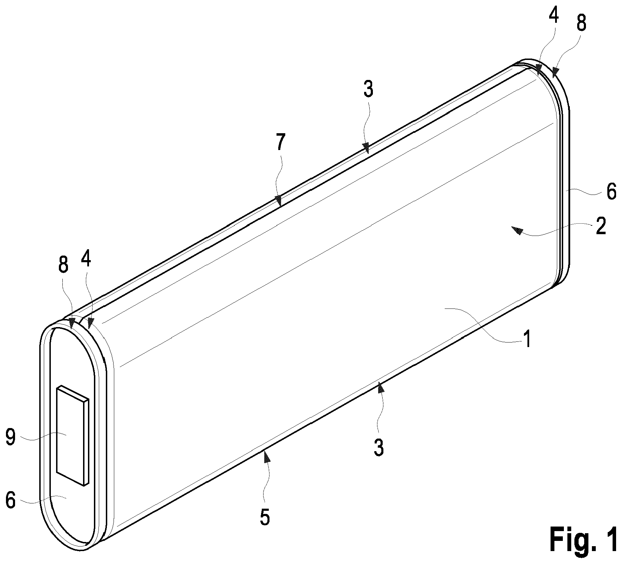

- Fig. 1:: eine erfindungsgemäße Batterie;

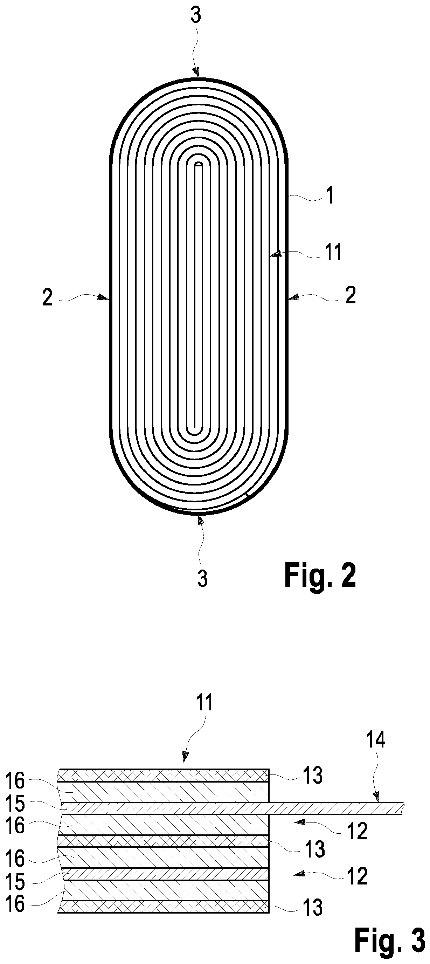

- Fig. 2:: einen Querschnitt durch die Batterie;
- Fig. 3:: einen Abschnitt einer Batteriezellenwicklung der Batterie; und
- Fig. 4 bis 7:: verschiedene Umformschritte im Rahmen der Verbindung eines Batteriedeckels mit einem Gehäusemantel der Batterie.

Die in den Zeichnungen dargestellte Batterie umfasst ein Gehäuse mit einem Gehäusemantel 1, der die Form eines Rohrstücks aufweist, so dass an den zwei in einer Längsrichtung des Gehäusemantels 1 gelegen Enden jeweils eine Zugangsöffnung ausgebildet ist. Die Querschnittsform des Gehäusemantels 1 ist eckenfrei ausgestaltet, wobei zwei parallel verlaufende Flachabschnitte 2 und zwei diese Flachabschnitte jeweils verbindende Krümmungsabschnitte 3, die in etwa halbkreisförmig verlaufen, vorgesehen sind. Die Querschnittsformen des Gehäusemantels 1 sind dabei im Wesentlichen über der gesamten Längserstreckung gleich (d.h. mit gleichen Querschnittskonturen und gleichen Querschnittsflächen). Lediglich in jeweils einem endseitig gelegenen, relativ kurzen Randabschnitt 4 sind die Querschnittsflächen bei grundsätzlich gleichen Querschnittskonturen etwas kleiner ausgeführt. Diese Randabschnitte 4 gehen dabei über einen Absatz in einen Hauptabschnitt 5, der die relativ großen Querschnittsflächen aufweist, über.

Die Randabschnitte 4 dienen einer Anbindung jeweils eines Gehäusedeckels 6, wobei durch die kleineren Querschnittsflächen in den Randabschnitten 4 des Gehäusemantels 1 erreicht wird, dass die Batterie nach der Verbindung der Gehäusedeckel 6 mit dem Gehäusemantel 1 über der gesamten Länge im Wesentlichen die gleichen Außenumfangsabmessungen aufweist.

Eine Herstellung des Gehäusemantels 1 erfolgt als Biegebauteil aus einem Blechzuschnitt, wobei zwei Randbereiche des Blechzuschnitts eine in der Längsrichtung verlaufende (linienförmige) Verbindungsstelle 7 ausbilden. Dabei sind die Randbereiche des Blechzuschnitts überlappend ausgeführt und stoffschlüssig gefügt, um sowohl eine ausreichend mechanisch feste als auch gut abdichtende und insbesondere gasdichte Verbindungsstelle 7 zu realisieren.

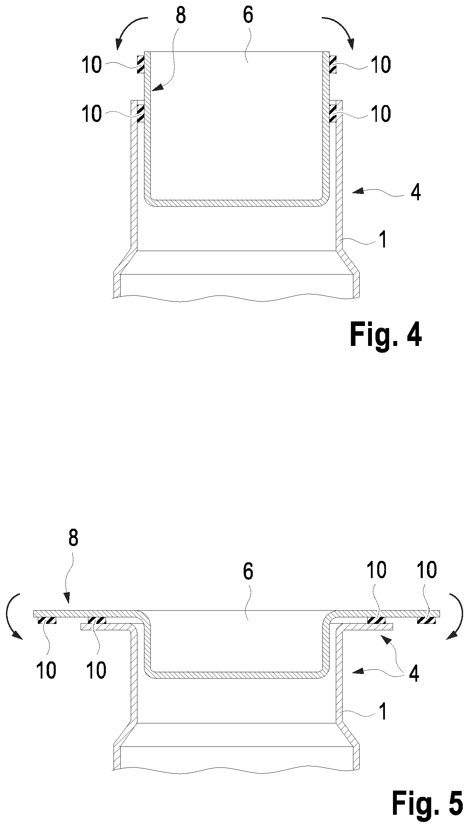

Die zwei Zugangsöffnungen des Gehäusemantels 1 werden im Rahmen der Herstellung der Batterie 1 mit jeweils einem der Gehäusedeckel 6 verschlossen und die Gehäusedeckel 6 dabei wiederum gasdicht mit dem Gehäusemantel 1 verbunden. Dieses Verbinden erfolgt gemäß den Fig. 4 bis 7 formschlüssig durch ein gemeinsames Umformen jeweils eines Randabschnitts 4 des Gehäusemantels 1 und eines Randabschnitts 8 der einzelnen Gehäusedeckel 6. Die Gehäusedeckel 6 werden separat als Stanz-Biegebauteile hergestellt und weisen dadurch als Ausgangsform eine Schalenform mit einem Boden sowie mit einer einschalig umlaufenden Wandung auf. Innerhalb des Bodens ist eine rechteckige Öffnung ausgebildet, in die jeweils noch vor dem Verbinden der Gehäusedeckel 6 mit dem Gehäusemantel 1 ein Batteriepol 9 fest integriert wird. Weiterhin werden außenseitig an den umlaufenden Wandungen der Gehäusedeckel 6 jeweils zwei umlaufende Dichtelemente 10 befestigt, beispielsweise verklebt.

Die Gehäusedeckel 6 werden zunächst gemäß der Fig. 4 in der Ausgangsform (mit integriertem Batteriepol 9) bis zu einer definierten Tiefe durch die jeweils zugeordnete Zugangsöffnung in den Gehäusemantel 1 eingebracht. Ein erstes der Dichtelemente 10 ist dabei bereits zwischen dem jeweiligen Gehäusedeckel 6 und dem Gehäusemantel 1 angeordnet. Ein Bereich der umlaufenden Wandung des jeweiligen Gehäusedeckels 6, in dem das zweite der Dichtelemente 10 angeordnet ist, überragt dagegen in dieser Anordnung noch den zugehörigen Randabschnitt 4 des Gehäusemantels 1.

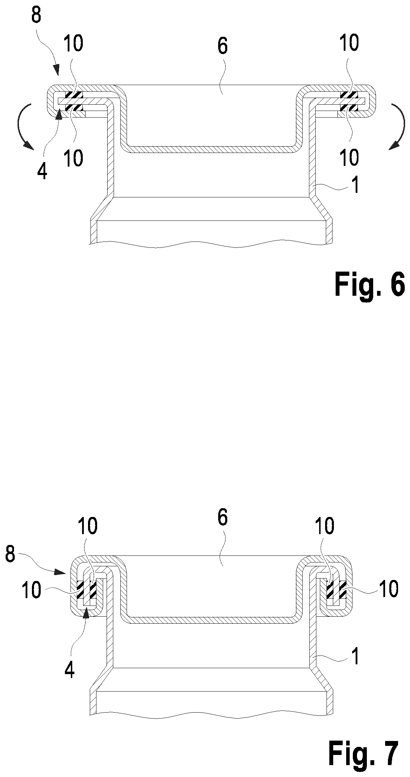

Anschließend werden gemäß der Fig. 5 die Randabschnitte 8 der Gehäusedeckel 6 jeweils zusammen mit dem zugeordneten Randabschnitt 4 des Gehäusemantels 1 um ca. 90° nach außen umgebogen und darauf folgend der jeweils überstehende Bereich der Randabschnitte 8 der Gehäusedeckel 6 um ca. 180° um den nach außen ragenden, zugeordneten Randabschnitt 4 des Gehäusemantels 1 umgebogen, wodurch die Randabschnitte 8 der Gehäusedeckel 6 jeweils einen Umschlag ausbilden (vgl. Fig. 6). Dabei ergibt sich, dass die Dichtelemente 10 einander gegenüberliegend auf den beiden verschiedenen Seiten der jeweils nach außen ragenden Randabschnitte 4 des Gehäusemantels 1 angeordnet sind. Abschließend wird die Kombination aus einem innerhalb des Umschlags des Randabschnitts 8 eines der Gehäusedeckel 6 gelegenen Randabschnitt 4 des Gehäusemantels 1 um 90° umgebogen und dadurch der abschließende Verbindungszustand gemäß der Fig. 7 erreicht.

Alternativ zu diesem Umformprozess kann auch vorgesehen sein, dass die Randabschnitte 8 der Gehäusedeckel 6 ausgehend von dem Ausgangszustand gemäß der Fig. 4 zunächst um ca. 180° zu dem Umschlag umgeformt werden und daraufhin jeweils die Kombination aus diesem Umschlag und einem innerhalb dieses Umschlags eines Randabschnitts 8 eines der Gehäusedeckel 6 gelegenen Randabschnitt 4 des Gehäusemantels 1 um ca. 180° in den abschließenden Verbindungszustand gemäß der Fig. 7 umgeformt wird.

Die Batterie 1 umfasst neben dem Gehäuse einen Batteriezellenwickel 11. Dieser umfasst zwei flächige Elektroden 12 und drei an diese Elektroden 12 angrenzende, elektrisch isolierende, flächige Separatoren 13. Eine erste der Elektroden 5 fungiert bei einem Entladen der Batterie als Anode und die zweite der Elektroden 5 als Kathode. Die Separatoren 12 können gleichzeitig auch ein Festelektrolyt der Batteriezellen sein. Alternativ kann ein insbesondere flüssiger Elektrolyt in das Gehäuse eingebracht werden, nachdem die Gehäusedeckel 6 mit dem Gehäusemantel 1 verbunden wurden. Die Separatoren 13 können dann mit dem Elektrolyten getränkt sein. Die Elektroden 12 und die Separatoren 13 sind in einem Stapel angeordnet. Dieser Stapel wird dann zu dem Batteriezellenwickel 11 aufgewickelt beziehungsweise aufgerollt. Die Querschnittsformen des Batteriezellenwickels 11 sind dabei an die Querschnittsformen des Gehäusemantels 1 (in dem Hauptabschnitt 5) angepasst, so dass innerhalb des Gehäuses bei darin angeordnetem Batteriezellenwickel 11 keine größeren Freiräume vorhanden sind und der Batteriezellenwickel 11 weitestgehend spaltfrei an der Innenseite des Gehäusemantels 1 anliegt. Eine Ausdehnung des Batteriezellenwickels 11 im Betrieb der Batterie kann dadurch zu einer möglichst gleichmäßigen Flächenpressung in dem Kontakt zwischen dem Batteriezellenwickel 11 und dem Gehäusemantel 1 führen, was sich vorteilhaft hinsichtlich der Leistungsfähigkeit und der Lebensdauer der Batterie auswirken kann.

Jede der Elektroden 12 umfasst einen Stromableiter 14, wobei der Stromableiter 14 der ersten der Elektroden 12 mit einem ersten der Batteriepole 9 und der Stromableiter 14 der zweiten der Elektroden 12 mit einem zweiten der Batteriepole 9 verbunden sind.

Die Stromableiter 14 sind mit den Elektroden 12 integral ausgestaltet, indem jeweils ein flächiges Substrat 15 aus einem elektrisch leitfähigen Material, beispielsweise einer Metallfolie, in einem Abschnitt, der Teil der Elektrode 12 ist, beidseitig mit einem anodisch oder kathodisch wirksamen Aktivmaterial 16 beschichtet ist, während ein unbeschichteter Abschnitt des Substrats 15 den zu der jeweiligen Elektrode 5 gehörenden Stromableiter 14 darstellt. Die Stromableiter 14 können dabei an sich gegenüberliegenden Seiten des Stapels aus Elektroden 12 und Separatoren 13 angeordnet sein, um eine vorteilhafte Verbindung mit dem jeweils zugeordneten Batteriepol 9 zu ermöglichen.

### BEZUGSZEICHENLISTE

- 1: Gehäusemantel
- 2: Flachabschnitt des Gehäusemantels
- 3: Krümmungsabschnitt des Gehäusemantels
- 4: Randabschnitt des Gehäusemantels
- 5: Hauptabschnitt des Gehäusemantels
- 6: Gehäusedeckel
- 7: Verbindungsstelle des Gehäusemantels
- 8: Randabschnitt des Gehäusedeckels
- 9: Batteriepol
- 10: Dichtelement
- 11: Batteriezellenwickel
- 12: Elektrode
- 13: Separator
- 14: Stromableiter
- 15: Substrat
- 16: Aktivmaterial

## Patentansprüche

1. Batterie mit einem Gehäuse und mindestens einer innerhalb des Gehäuses aufgenommenen Batteriezelle, wobei das Gehäuse einen die mindestens eine Batteriezelle umgebenden Gehäusemantel (1) umfasst, der an den zwei in einer Längsrichtung des Gehäusemantels (1) gelegenen Enden jeweils eine Zugangsöffnung aufweist, die mittels jeweils eines Gehäusedeckels (6) verschlossen ist, **dadurch gekennzeichnet, dass** der Gehäusemantel (1) als Biegebauteil aus einem Blechzuschnitt ausgebildet ist, wobei zwei Randbereiche des Blechzuschnitts eine in der Längsrichtung verlaufende Verbindungsstelle (7) ausbilden.

2. Batterie gemäß Anspruch 1, **dadurch gekennzeichnet, dass** die Randbereiche zur Ausbildung der Verbindungsstelle (7) stoffschlüssig gefügt sind.

3. Batterie gemäß Anspruch 1 oder 2, **dadurch gekennzeichnet, dass** die Querschnittsform des Gehäusemantels (1) eckenfrei ausgestaltet ist.

4. Batterie gemäß einem der vorhergehenden Ansprüche , **dadurch gekennzeichnet, dass** der Gehäusemantel (1) zwei parallel verlaufende Flachabschnitte (2) und zwei die Flachabschnitte (2) jeweils verbindende Krümmungsabschnitte (3) aufweist.

5. Batterie gemäß einem der vorhergehenden Ansprüche , **dadurch gekennzeichnet, dass** die mindestens eine Batteriezelle als Batteriezellenwickel (11) mit an den Gehäusemantel (1) angepasster Querschnittsform ausgestaltet ist.

6. Batterie gemäß einem der vorhergehenden Ansprüche, **dadurch gekennzeichnet, dass** der Gehäusemantel (1) und/oder die Gehäusedeckel (6) einen Grundkörper sowie außenseitig und/oder innenseitig des Grundkörpers eine Zusatzschicht aufweist/aufweisen.

7. Batterie gemäß einem der vorhergehenden Ansprüche , **dadurch gekennzeichnet, dass** die Gehäusedeckel (6) mit dem Gehäusemantel (1) formschlüssig verbunden sind.

8. Batterie gemäß Anspruch 7, **dadurch gekennzeichnet, dass** jeweils ein Randabschnitt (4) des Gehäusemantels (1) und ein Randabschnitt (8) der Gehäusedeckel (6) zusammen umgeformt sind.

9. Batterie gemäß Anspruch 8, **dadurch gekennzeichnet, dass** die Randabschnitte (4) des Gehäusemantels (1) jeweils in einem ersten Umschlag eines Randabschnitts (8) der Gehäusedeckel (6) angeordnet sind und diese Kombination jeweils zu einem zweiten Umschlag umgeformt ist.

10. Batterie gemäß einem der vorhergehenden Ansprüche, **dadurch gekennzeichnet, dass** jeweils mindestens ein Dichtelement (10) zwischen dem Gehäusemantel (1) und den Gehäusedeckeln (6) angeordnet ist.

11. Batterie gemäß Anspruch 9 und 10, **dadurch gekennzeichnet, dass** jeweils mindestens zwei Dichtelemente (10) zwischen dem Gehäusemantel (1) und den Gehäusedeckeln (6) angeordnet sind, wobei von den mindestens zwei Dichtelementen (10) jeweils mindestens eines auf den beiden Seiten des innerhalb des ersten Umschlags gelegenen Randabschnitts des Gehäusemantels (1) gelegen ist.

12. Batterie gemäß einem der vorhergehenden Ansprüche, **dadurch gekennzeichnet, dass** eine Schwachstelle der Verbindungsstelle (7) ein Überdruckventil ausbildet und/oder ein Überdruckventil in mindestens einen der Gehäusedeckel (6) integriert ist.
